Europäisches Patentamt

European Patent Office

Office européen des brevets

(11) Publication number: **0 072 132**
**B1**

(12) **EUROPEAN PATENT SPECIFICATION**

(45) Date of publication of patent specification: **20.08.86**

(21) Application number: **82303904.5**

(22) Date of filing: **23.07.82**

(51) Int. Cl.⁴: **B 29 C 65/18**

(54) Apparatus for heat sealing of thermoplastics straps.

(30) Priority: **05.08.81 GB 8123902**

(43) Date of publication of application:
**16.02.83 Bulletin 83/07**

(45) Publication of the grant of the patent:
**20.08.86 Bulletin 86/34**

(84) Designated Contracting States:
**AT BE CH DE FR GB IT LI LU NL SE**

(56) References cited:
**EP-A-0 022 615**
**DD-A- 106 591**
**DE-A-1 629 160**
**DE-A-1 909 894**
**DE-A-2 363 275**
**DE-C-1 285 384**
**DE-U-7 237 649**
**FR-A-1 246 745**
**GB-A-1 143 442**
**US-A-3 863 557**

(73) Proprietor: **INTERLAKE UK LIMITED**
**Kilnhurst near Rotherham South Yorkshire S62 5SX (GB)**

(72) Inventor: **Ford, Graham Paul**
**36 St. Matthews Street**
**Cambridge (GB)**

(74) Representative: **Matthews, Heather Clare et al**
**Keith W Nash & Co Pearl Assurance House**
**90-92 Regent Street**
**Cambridge CB2 1DP (GB)**

Courier Press, Leamington Spa, England.

## Description

Field of Invention

This invention relates to apparatus for heat sealing together layers of strap of thermoplastics material such as polyester and polypropylene.

Background to the Invention

In the packaging industry, it is a common requirement to tension and secure a thermoplastics strap around the periphery of a package. In order to secure the tensioned loop, two layers of strap must be fixed together where they overlap at the common beginning and end of the loop.

Mechanical fastenings such as metal clips crimped around the two strap layers or deformable wire buckles locking to the two strap layers produce a structurally inefficient joint and are expensive to produce and handle.

Friction welding, wherein a flat or cylindrical pad is oscillated parallel to the plane of contact of the two strap layers in pressure contact therewith can also result in a structurally inefficient joint for some types of strap, especially a strap of polyester and, in addition, an uncomfortable amount of noise is generated. Furthermore, the high power required necessitates use of a compressed air or mains electric drive.

Ultra-sonic welding is equally disadvantageous, being less successful for some types of strap than others, and requiring relatively complex circuitry for providing the necessary operating power.

A known heat sealing process also demands use of a high power source external to the sealing equipment. In this process, a continuously or intermittently heated, relatively massive, heating element is caused to enter between the two layers of strap by moving said element across the strap from one longitudinal edge to the other. The two strap layers are first pressed against the heating element and then, after a short delay, the element is rapidly retracted and the two strap layers are pressed together at the heated regions thereof. This process, in addition to disadvantageously requiring an external power source, produces considerable unpleasant fumes, since the operating temperature rises to a value necessarily higher than this decomposition temperature of the strap material.

Known from German Specification No. 1285384 is a heat sealing apparatus in which a thin flat heating element is moved reciprocally between two overlapping strap layers to be sealed together, generally in the longitudinal direction of said layers. The heating element is in this instance moved forward by a supporting member which retracts under spring pressure.

The use of a heating element of low thermal mass has been proposed in East German Specification No. 106591, but its use in the apparatus of No. 1285384 has not led to useful advantage, since the heating element therein remains clamped in position for as long as it take to melt off the surface of the plastics layers.

It is an object of this invention to provide improved apparatus for heat sealing together two layers of thermoplastics strap, in particular being apparatus which can be made fully portable, i.e. having an internal power source, and which is capable of operation substantially without generation of noise and fumes, whilst at the same time producing a structurally efficient joint.

Summary of the Invention

According to the invention, there is provided apparatus for heat sealing together layers of strap of thermoplastics material, comprising a thin flat electrical heating element, means supporting said heating element and means for moving said supporting means so that in use the heating element moves between two layers of strap generally in the longitudinal direction thereof, and is characterised in that said heating element is supported in stretched condition in a carriage which is reciprocated to cause the heating element to perform a cyclic movement forward and back between the two strap layers; the heating element is connected in a heating current circuit which includes a switch and is powered by a battery source; the switch is closed and opened in timed relationship to the reciprocating movement of the carriage in order to supply heating current to the heating element during a preselected portion of its cyclic movement; and the heating element is of low thermal mass such that it is maintained at a required plastics fusing temperature for the period that the switch is closed and not beyond such period.

Being thin, the heating element can have low thermal mass and may be supplied with heating current from a battery source, e.g. source employing lead acid or nickel-cadmium cells, preferably sealed and rechargeable. The apparatus can thus be of portable nature, e.g. the equipment can take the form of a hand tool.

In a preferred embodiment of the invention the heating comprises two or more thin, flat, elongated electrical heating elements, means supporting said two or more heating elements under tension in generally parallel relationship, and means for moving said supporting means so that in use all the said two or more heating elements are moved transversely to their lengths between the two layers of strap generally in the longitudinal direction thereof.

According to a preferred aspect of the present invention, there is provided heating element assembly for use in the heat sealing apparatus comprising a support, a plurality (generally two) of thin, flat, elongated electrical heating elements mounted to said support by connecting means at the ends of said such element, and at least one connecting means for each such heating element comprising a tensioning element for maintaining the corresponding heating element under tension even when hot.

Electrical contact elements, fixed to or integrally formed with each of the above-described tensioning elements, may project laterally to opposite sides of the heating assembly to enable power connections to be made to the respective heating elements without interference.

Conveniently, the or each heating element is tensioned by stretching between a support and tensioning element.

The tensioning element may be an elongate element extending in line with a heating element.

In one embodiment the tensioning element is resiliently formed by concertina-type folds transverse to its length.

Alternatively a U-shaped spring may be used to tension each element.

In a preferred embodiment of the invention a heating element assembly the heat sealing apparatus comprises a support, a thin flat electrical heating element carried by the support, and connecting means between the support and the heating element at both ends of the latter, at least one of such connecting means being constituted by a tensioning element in the form of a spring having a foot connected to the heating element, an intermediate U-portion the limbs of which can flex towards and apart from one another in line with or parallel to the length of the heating element, and an end portion whereat the spring is anchored to effect tensioning of the heating element.

While a tensioning element as described is possible at both ends of the heating element, it is preferred that the connecting means at the other end of the heating element be a direct connection such as a weld effected under a weld pad. Heating current may then be supplied to the heating element through the above-described spring, the foot of which is electrically insulated from the support, as by means of an insulating pad.

In a preferred construction, the foot is elongated in the direction of the length of the heating element, with one limb of the U-portion at the remote rear end of said foot, the other limb of the U-portion being shorter and nearer the heating element, and the end portion projecting from the lower end of said other limb, preferably forwardly. A laterally extending contact element can then be fixed to said end portion, said contact element having an end piece extending back parallel to and away from the heating element, thereby to facilitate fixing thereof to a carriage on which the support is mounted and by means of which the complete heating assembly can be moved between two layers of thermoplastics strap to be heat sealed together. The contact element may be formed as an integral part of the spring tensioning element if desired.

Conveniently, the width of the heating element is at most about one half its unsupported length between the support and the tensioning element. The unsupported length of the heating element generally corresponds to the width of strap to be heat sealed, since in use it is proposed to move the heating element, transversely of its length, longitudinally along between two layers of strap to be heat sealed together, as described herein.

In a preferred arrangement, the support is made of cold rolled stainless steel, the spring is made of Berylium-copper alloy and the heating element is made of a high electrical resistivity, high temperature strength alloy, such as Inconel. In this preferred arrangement, the support is a thin, flat, short limbed U-support and the heating element is secured at one end to one short limb to extend generally parallel to a long crosspiece of the support to the tensioning element, which is slidingly supported but insulated from the other short limb.

Each heating element is preferably a flat element, of low thermal mass as aforesaid, and between about 0.05 mm and 0.20 mm thick with a width about one half of its unsupported length between the support and the tensioning element i.e. one half the width of the strap with which the heating element is designed to co-operate.

In a preferred method of use the heating element is moved first in one direction and then in the opposite sense substantially in the longitudinal direction of the strap. In apparatus for performing this method switching means is provided for supplying heating current to the heating element only during one sense of the forward and reverse motion, and the fusing pressure is applied only during this sense of the motion.

It is a problem with an arrangement such as described that durable electrical connections must be established to the heating element or heating elements from a stationary power control circuit, since it is obviously desirable that the battery source of the portable tool, and the control circuitry including switches, should not be mounted on the oscillatable carriage which carries the heating element assembly.

Flying leads have the disadvantage that fatigue may set in prematurely, and present practical problems in enabling a relatively large oscillation for the contemplated size of tool. The thin cabling which would be desirable to allow movement thereof without undue mechanical resistance as the oscillations take place introduces substantial electrical resistance.

According to a further feature of the present invention, a pair of substantially rigid electrical connectors carry contacts making sliding electrical engagement with a corresponding pair of electrical rails carried by a structure relative to which the heating element is reciprocable, the rails extending parallel to the direction of reciprocation and being adapted for supply of electrical power thereto in order to transmit heating current to and from one or more heating elements through said connectors and contacts.

The preferred apparatus includes a pressure pad for pressing the strap layers together under a fusing pressure in the heated regions of said layers, said pad being mounted for rocking about an axis perpendicular to the length direction of the strap layers and being resiliently deformable so as to be capable of bowing about the rocking axis to accommodate the movement of the heating element between the two layers of fusible material.

Preferably, a separator plate is provided between the two layers of fusible material to separate the strap layers prior to heating.

In a preferred arrangement layers of material are sandwiched between a first pressure pad which is constituted by a fixed first platen, and the rockable pressure pad is supported by a second platen, the latter being movable as by pivoting away from the first platen to enable the fusing pressure to be applied and to be relieved.

In this last mentioned arrangement, the heating element (which may be a multiple element) rockable pressure pad and separator plate when provided, form part of a heating and fusing assembly which is reciprocable along the length of the strap layers, with heating current supplied only during one sense of the reciprocating motion, as previously proposed.

The pressure pads are preferably of non-compressible material; in particular the rockable pressure pad and the separator plate may conveniently be made of cold rolled stainless steel.

As so far described the invention provides a solution to many of the problems associated with the use of thermoplastics straps for packaging purposes. There is, however, a final step in the packaging process not yet dealt with.

When the strap, e.g. drawn from a supply reel, has been looped around the package and the loop tensioned and secured by heat sealing two strap layers together, it is necessary to cut one strap layer, e.g. that extending from the supply reel, without severing the other.

According to another feature of the invention, the apparatus may include a cutting means for severing one strap layer and not the other after fusing the strap layers together, said cutting means including a knife edge which is operable on one of said layers against the backing afforded by a solid element.

The knife edge most preferably forms part of a heated knife, whereby the mechanical effort needed for cutting is minimised.

The said solid element can be a heating element, such as a thin, flat, heating element or one of such elements as described herein, or it can for example be the aforementioned separator.

Practical apparatus for heat sealing together two layers of thermoplastics strap will now be described by way of example with reference to the accompanying drawings.

In the Drawings
Figure 1 diagrammatically shows a preferred heating element assembly in perspective view,

Figure 2 diagrammatically illustrates a preferred method of heat sealing a thermoplastics strap using the heating element assembly of Figure 1,

Figure 3 shows a simple power circuit for supplying heating current to the heating element,

Figure 4 diagrammatically shows another heating element assembly in perspective view,

Figure 5 diagrammatically shows another embodiment of heating element assembly in perspective view,

Figure 6 shows a further embodiment of heating element assembly,

Figure 7 shows in diagrammatic form a means for supplying electrical power to the heating element assembly,

Figure 8 diagrammatically illustrates one form of apparatus for heat sealing a thermoplastics strap using a heating and fusing assembly incorporating the sub-assembly of Figure 5 which incorporates a cutter, and

Figure 9 is a plan view to an enlarged scale of the cutter shown in Figure 8.

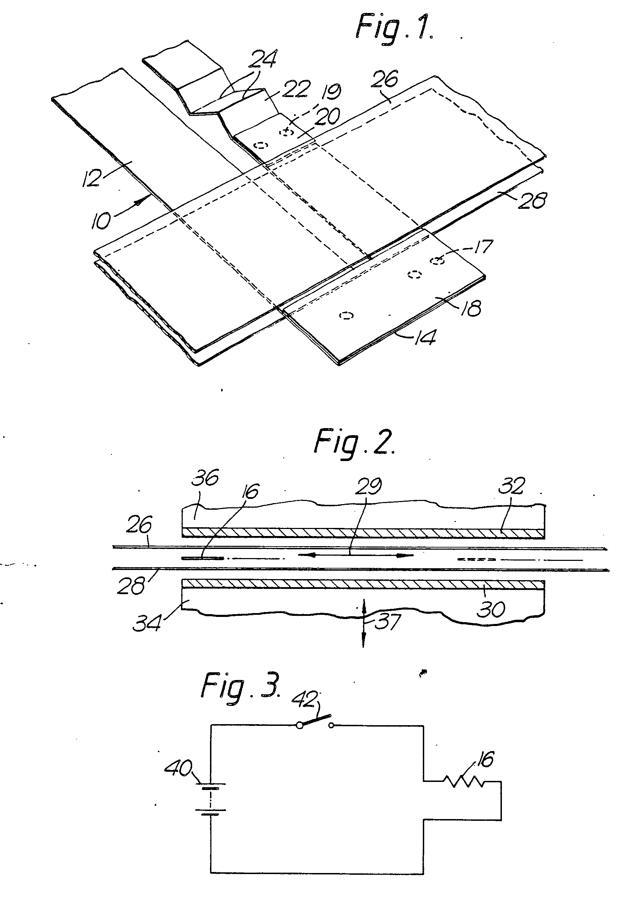

Detailed Description of Illustrated Embodiments
The heating element assembly in Figure 1 comprises a somewhat resilient, flat, L-shaped support 10, conveniently of stainless steel, with a long leg 12 and short leg 14. One end of a thin, flat, heating element 16, made of high resistivity, high temperature alloy such as Inconel, is spot welded, as indicated at 17, to the short leg 14 under a weld pad 18. The other end of the heating element 16 is spot welded, as indicated at 19, under a weld pad 20, to a tensioning element 22. The tensioning element 22, conveniently of stainless steel, is resiliently formed by means of concertina-type folds 24 transverse to its length. The assembly thus forms a U-shape, with the heating element 16 tensioned parallel to the long leg 12 of the L-support 10.

The complete heating element assembly is mounted to a carriage (not shown) disposed to the side of two layers 26, 28 of thermoplastics strap to be heat sealed together, so that the U-shaped assembly, and in particular the heating element 16 (and corresponding part of the long leg 12 of the L-support) can be moved transverse to its length, between the two strap layers, in the longitudinal direction of the strap.

The preferred heating element 16 of Inconel is conveniently between 0.05 mm and 0.20 mm thick, with a width of about one half its unsupported length between the L-support 10 and the tensioning element 22, the latter corresponding to the width of the strap which the heating element is designed to seal. As compared with conventional heating elements for heat sealing, the element 16 thus possesses a very low thermal mass. In Figures 1 and 2, the electrical leads to the element 16 are omitted.

While the heating element 16 supplied with heating current is moving between the strap layers 26, 28 more particularly by moving the supporting carriage with a forward and reverse motion parallel to the length of the strap, as indicated by arrow 29 in Figure 2, the two strap layers are urged together under a fusing pressure. This fusing pressure is exerted by two resilient pads 30, 32 (see Figure 2), backed by respective rigid supports 34, 36. At least one support, the support 36 for instance and the resilient pad 30 carried thereby, is movable towards the other, as indicated by arrow 37, to enable the fusing pressure to be applied and relieved, as appropriate. Each pad 30, 32 is otherwise stationary, being wide enough to cover the full width of the strap and long enough to cover the entire stroke of reciprocation of the heating element, i.e. to cover the entire heated area of the two layers of strap.

The two layers of strap 26, 28 are thus urged together, with the moving heating element 16 sandwiched therebetween, with a substantially uniform pressure over the entire heated area. Foam rubber is a convenient material for the pads 30, 32.

As indicated in Figure 3, heating current for the heating element 16 is obtained from a battery source 40 of secondary cells, e.g. rechargeable sealed nickel-cadmium cells, supplied through a switch 42 operable by suitable means (not shown) to open and close in synchronism with the reversals of the forward and reverse motion of the heating element assembly. Thus, the heating element 16 is supplied with current, at least 20 amps from a 1 to 3, e.g. 2.5, voltage source, only during the reverse stroke of the forward and reverse motion. During such reverse stroke, the speed of movement of the heating element is carefully controlled, taking into account the materials involved, so that no part of the heating element assembly is heated as high as the decomposition temperature of the strap material. This is facilitated by use of the thin flat heating element of low thermal mass, the entire heating area of which is sandwiched between the two strap layers under the fusing pressure, so that heat is extracted from the heating element assembly at a rate which maintains the heated regions of the strap layers at a temperature only a little above the melting point of the thermoplastics material concerned.

Preferably, the fusing pressure is applied only during the reverse stroke of the forward and reverse motion of the heating element, while heating is taking place. For this purpose, the pad 30 may be automatically moved to the fusing pressure position at the beginning of a reverse stroke.

At the end of the reverse stroke of the heating element, the heating element assembly is retracted from the heated region of the strap whilst the fusing pressure is maintained until the melted thermoplastics material has resolidified fusing the two strap layers together. Simultaneously, of course, the heating current is cut off, thereby to ensure that the element does not overheat.

A seal about 30 mm long (along the length of the strap) can be effected in about one second. Such a seal in a typical case will have strength of at least 60 percent of the parent material. However, means will be provided to adjust the length of seal i.e. the length of the strokes of the forward and reverse movement of the heating element, since some variation of the length of the seal will be required in accordance with differing widths of strap.

The above description assumes that a seal can be completed with a single cycle of reciprocation (forward and reverse motion) of motion of the heating element assembly. However, although unlikely to be required, preliminary heating strokes to initiate softening of a thermoplastics material of relatively high melting point can be carried out. In this case, the fusing pressure will be applied only during the final reverse stroke.

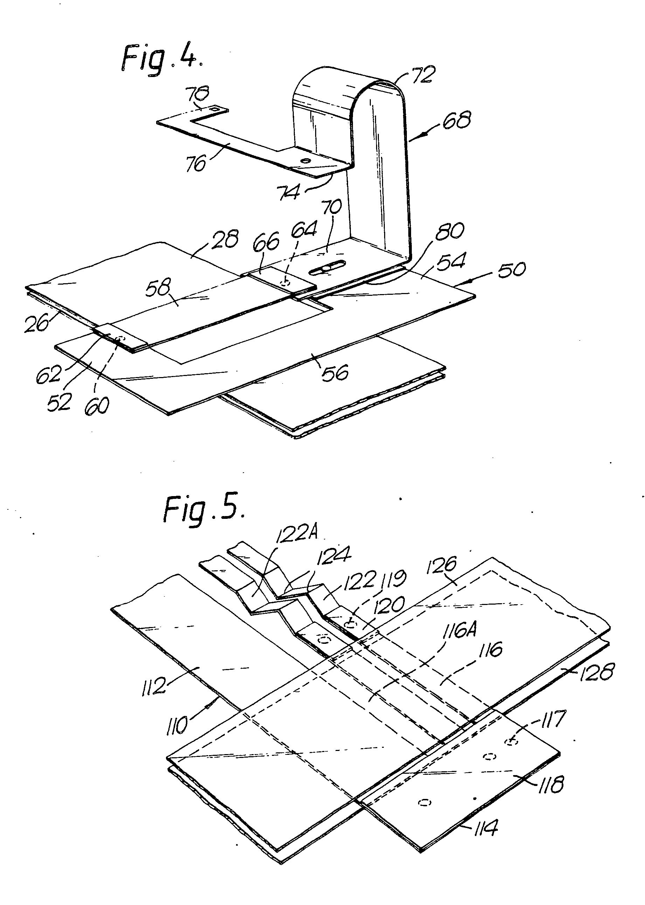

The heating element assembly of Figure 4 comprises a somewhat resilient, flat, U-shaped support 50, conveniently of cold rolled, stainless steel, with short limbs 52 and 54 connected by a longer crosspiece 56. One end of a thin, flat, heating element 58, (corresponding to item 16 in Figure 1) and made of high resistivity, high temperature alloy such as Inconel, is spot welded, as indicated at 60, to the limb 52 under a weld pad 62. The other end of the heating element 58 is spot welded, as indicated at 64, under a weld pad 66, to a tensioning element 68. The tensioning element 68, conveniently of Berylium-copper alloy is formed with a foot 70, to which the heating element 58 is welded at 64, which foot is elongated rearwardly away from the heating element. Upstanding from the foot 70 the tensioning element 68 has an intermediate U-portion 72, the limbs of which can flex towards and away from one another generally in line with the length of the heating element 58, and a forwardly extending end portion 74 which is fixed as by welding to a relatively rigid, electrical contact element 76 of L-shape. The contact element 76 extends generally laterally, with a piece 78 at its most lateral end extending rearwardly to enable anchorage thereof in a manner which tensions the heating element 58. In use, current for the heating element 58 is supplied through this contact element 76 and the spring tensioning element 68. The foot 70 of the tensioning element 68 is therefore electrically insulated, as by an insulating pad 80 over which it can slide, from the limb 54 of the support 50. In use, when the thin heating element 58 expands due to heating thereof, the tensioning element is able to flex to maintain the tension in said heating element which is essential to avoid risk of buckling.

The complete heating element assembly shown in Figure 4 is mounted to a carriage (not shown) disposed to the side of two layers 26, 28 of thermoplastics strap to be heat sealed together, so that the U-shaped assembly, and in particular the heating element 58 (and corresponding part of the long crosspiece 56 of the U-support 50) can be moved transverse to its length, between the two strap layers, in the longitudinal direction of the strap. It is the fixing of the contact element 76 to this carriage which ensures that the heating element 58 is always properly tensioned.

The preferred heating element 58 of Inconel is conveniently between 0.05 mm and 0.20 mm thick, with a width of at most about one half its unsupported length between the limb 52 of the U-support 50 and the tensioning element 68, the latter being slightly wider than the width of the strap which the heating element 58 is designed to seal. As compared with conventional heating elements for heat sealing, the element 58 thus possesses a very low thermal mass. The electrical leads to the elements 58 and 76 are omitted. Although a range of 0.05 mm to 0.20 mm has been suggested for the element thickness there are many situations where a thicker element would be preferable such as in a bench mounted machine where a thickness of e.g. 0.40 mm or more may be used.

While the heating element 58 supplied with heating current is moving between the strap layers 26, 28 more particularly by moving the supporting carriage with a forward and reverse motion parallel to the length of the strap, in a similar manner as previously described for Figures 1 and 2 the two strap layers are urged together under a fusing pressure. This fusing pressure is exerted by two resilient pads 30, 32 back by respective rigid supports 34, 36. At least one support, the support 36 for instance and the resilient pad 30 carried thereby, is movable towards the other, as indicated by arrow 37, to enable the fusing pressure to be applied and relieved, as appropriate. Each pads 30, 32 is otherwise stationary, being wide enough to cover the full width of the strap and long enough to cover the entire stroke of reciprocation of the heating element, i.e. to cover the entire heated area of the two layers of strap.

The two layers of strap 26, 28 are thus urged together, with the moving heating element 58 sandwiched therebetween, with a substantially uniform pressure over the entire heated area. Foam rubber is a convenient material for the pads 30, 32.

The heating element assembly of Figure 5 comprises a somewhat resilient, flat, L-shaped support 110, conveniently of stainless steel, with a long leg 112 and short leg 114. One end of each of a pair of thin, flat elongated heating elements 116, 116A, made of high resistivity, high temperature alloy such as Inconel, is spot welded, as indicated at 117, to the short leg 114 under a weld pad 118. The heating elements 116, 116A are disposed in parallel relationship. The other end of each heating element 116, 116a is spot welded, as indicated at 119, under a weld pad 120, to a corresponding tensioning element 122, 122A. The tensioning elements 122, 122A conveniently of stainless steel, are each resiliently formed by means of concertina-type folds 124 transverse to its length. The assembly thus forms a W-shape, with the heating elements 116, 116A tensioned parallel to the long leg 122 of the L-support 110.

The complete heating element assembly is mounted to a carriage (not shown) disposed to the side of two layers 126, 128 of thermoplastics strap to be heat sealed together, so that the W-shaped assembly, and in particular the heating elements 116, 116A (and corresponding part of the long leg 112 of the L-support) can be moved transverse to its length, between the two strap layers, in the longitudinal direction of the strap.

The preferred heating elements 116, 116A of Inconel are each conveniently between 0.05 mm to 0.20 mm thick, with a width of at most one quarter its unsupported length between the L-shaped support 110 and the corresponding tensioning element 122, 122A, the latter corresponding to the width of the strap which the heating element is designed to seal. As compared with conventional heating elements for heat sealing, the elements 116, 116A thus possess a very low thermal mass. In Figure 5 the electrical leads to the elements 116, 116A are omitted.

Moreover, as compared to the single heating element proposed earlier the two elements 116, 116A of the present invention can have reduced thickness, i.e. a thickness at the lower end of the previously specified range, for equivalent power, or can operate at higher voltage and lower current for the same power.

While the heating elements 116, 116A supplied with heating current are moving between the strap layers 126, 128 more particularly by moving the supporting carriage with a forward and reverse motion parallel to the length of the strap, in the same manner (as indicated in Figure 2), the two strap layers are urged together under a fusing pressure.

The heating current for the heating elements 116, 116A is obtained from a source of secondary cells, e.g. rechargeable sealed nickel cadmium cells, supplied through a switch 142 operable by suitable means (not shown) to open and close in synchronism with the reversals of the forward and reverse motion of the heating element assembly. Thus the heating elements 116, 116A are supplied with current, at least 20 amps, (typically 40A) from a voltage source, of typically 5 v only during the reverse stroke of the forward and reverse motion. During such reverse stroke, the speed of movement of the heating elements is carefully controlled, taking into account the materials involved, so that no part of the heating element assembly is heated as high as the decomposition temperature of the strap material. This is facilitated by use of thin flat heating elements of low thermal mass, the entire heating area of which is sandwiched between the two strap layers under the fusing pressure, so that heat is extracted from the heating element assembly at a rate which maintains the heated regions of the strap layers at a temperature only a little above the melting point of the thermoplastics material concerned.

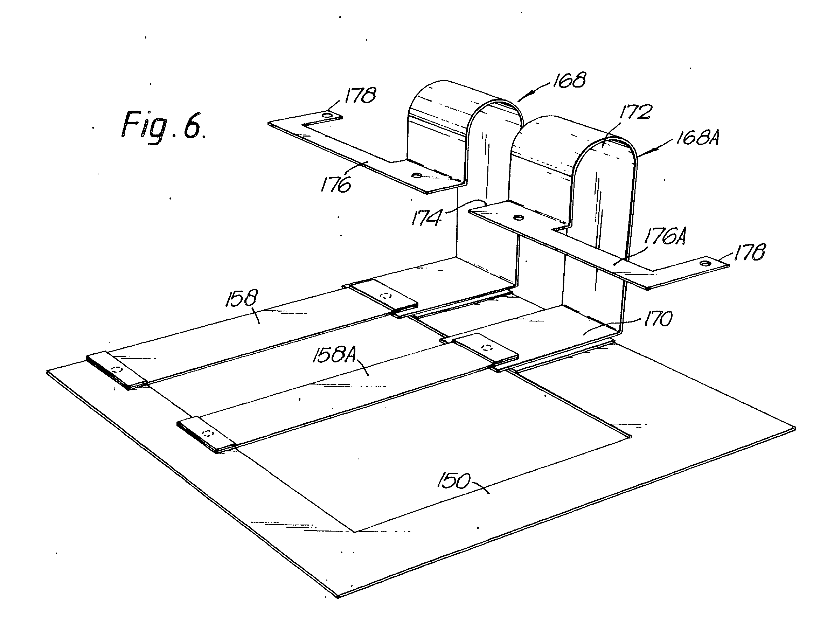

Figure 6 shows a modified heating assembly incorporating a U-shaped tensioning element wherein the tensioning elements 122, 122A of Figure 5 are replaced by springs 168, 168A of the construction illustrated, each having a foot 170, an intermediate U-portion 172 and an end portion 174 which is fixed to or integral with a laterally branched electrical contact 176, 176A. In use, current is supplied to the heating elements 158, 158A through these contacts 176, 176A respectively, the feet 170 of the springs 168, 168A being insulated from the support 150 which is movable by the carriage. The contacts 176, 176A are anchored at 178 in order to maintain tension in the heating elements 158, 158A, even when hot. The contacts 176, 176A conveniently project laterally to opposite sides in order to facilitate non-interfering electrical connections.

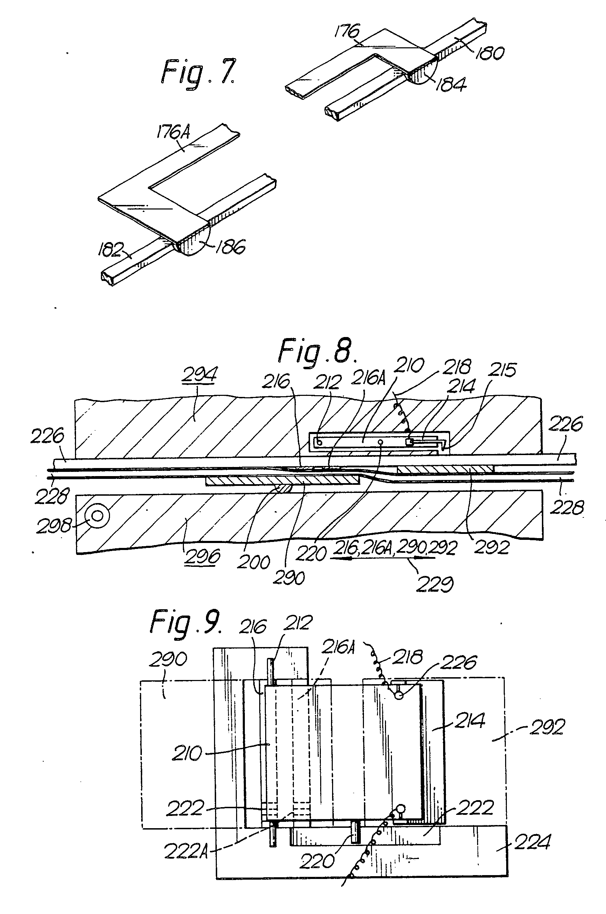

Figure 7 shows a means of anchoring the connectors 176, 176A which at the same time provides the means by which electrical power is supplied to the heating elements.

In Figure 7 two conductor rails 180, 182 are shown which are fixedly carried, parallel to the direction of reciprocation of the heating assembly carriage, by the structure, e.g. tool body, relative to which the carriage is reciprocable. Each connector 176, 176A carries a contact 184, 186, respectively, which engages behind the corresponding rail 180, 182, thus tensioning the springs 168, 168A (see earlier Figures). At the same time the contacts, which are preferably plated with a conductive metal such as silver, platinum, gold, copper or the like, makes electrical engagement with the conductor rails, with a contact pressure corresponding to the tension introduced into the springs. Power is supplied, as from a power circuit of Figure 3, to the conductor rails 180, 182, whereby in use heating current is supplied to the heating elements 158, 158A through the contacts 184, 186 and connectors 176, 176A.

As previously described, current is only supplied during the reverse sense of reciprocation. The forward stroke provides a wiping movement of the contacts 184, 186 along the rails 180, 182 which has a self-cleaning effect.

Although described particularly with reference to the heating element assembly of Figure 6 the current supply means of Figure 7 is also applicable to other heating element assemblies such as those shown in earlier Figures, simpy by providing suitable connectors, equivalent to the connectors 176, 176A, on the one or more heating elements of tensioning elements. In this case, however, the connectors may or may not also serve as anchorages for the one or more tensioning elements.

Figure 8 shows diagrammatically the components of a heating and fusing assembly based on the device shown in Figure 5 which is mounted for reciprocable movement. It includes, in addition to the heating element sub-assembly, conveniently references 216, 216A, a stainless steel pressure pad 290 and a stainless steel separator plate 292. The heating and fusing assembly is reciprocable in a plane disposed between upper and lower platens 294, 296. The upper platen 294 is fixed and the lower platen 296, which supports the spring steel pressure plate 290, is pivotable about pivot means 298 to enable the fusing pressure to be applied and to be relieved after heat sealing has been completed. The upper platen 296 can in itself be considered to constitute a fixed pressure pad. Figure 8 is especially concerned with the configuration of the reciprocable assembly when the platens are closed.

First, heating current is supplied to the heating elements 216, 216A only in one sense of the forward and reverse motion, this being the reverse left to right stroke as shown in Figure 8. The separator plate 292 thus acts to separate the two layers of thermoplastics strap 226, 228 before the opposed facing surface regions thereof are heated by the heating elements 216, 216A to effect melting without decomposition of the thermoplastics material. The pressure pad 290, overlaps the heating element sub-assembly 216, 216A, and has mounted on its underside a fulcrum 200 which allows the pad 290 to rock relative to the platen 296. In this way a differential force can be exerted by the pad 290 on the layer 228. The presence of the elements 216, 216A causes the pad 290 to rock in a clockwise manner so as to increase the squeezing pressure on the material trailing the heating elements as the sub-assembly of elements 216, 216A etc. move to the right, so as to ensure sufficient pressure to cause bonding of the strap material.

As mentioned ealier the heating current for the heating elements 216, 216A connected in series is obtained (as shown in Figure 3) from a battery source 40 of secondary cells, e.g. rechargeable sealed nickel-cadmium cells, supplied through a switch 42 operable by suitable means (not shown) to open and close in synchronism with the reversals of the forward and reverse motion of the heating element assembly.

Thus the heating elements 216, 216A are supplied with current, at least 20 amps, (typically 40A) from a voltage source, of typically 5 v only during the reverse stroke of the forward and reverse motion.

Figure 8 also shows a cutter mechanism which is incorporated into the apparatus for severing one strap layer, i.e. that extending from a supply reel, without severing the other, after heat sealing has taken place. Detail of this cutting means is also shown in Figure 9.

An insulating carrier board 210 is carried by a fixed pivot 212 above the line of the strap layers 226, 228 between which is movable the above-described heating and fusing assembly, which includes the heating elements 216, 216A and the separator plate 292. The board 210 carries a knife 214 having a severing edge 215 which extends across the full width of the strap. Flying leads 218 connect to opposite ends of the knife 214 so that severing can be effected, at the appropriate time, by a heated knife edge. This requires less mechanical effort than a mechanical guillotine, which is to be less preferred.

The board 210 is normally spring urged about the pivot 212 so that the knife edge 215 is biased upwardly away from the strap layers beneath it.

While heated, it is lowered to effect severing by means of an actuating finger 220 carried by the board 210 and which can engage a ramp surface 222 formed on the carriage 224 which effects reciprocation of the heating and fusing assembly.

In order that the heated knife edge 215 will sever only one layer (the upper layer 226) of the strap layers, its severing action is appropriately synchronised with the forward and reverse movement of the heating and fusing assembly. As previously mentioned, heating and fusing is effected during the reverse stroke of the reciprocation, left to right as shown in Figure 8. The knife assembly is located so that, at the end of this reverse stroke after heating and fusing has been completed, the knife edge 215 is disposed at least approximately above either one of the heating elements 216, 216A or the separator plate 292. (See later description of sub-assembly cycle.) This solid element, 216, 216A or 292, thus affords a backing for the knife between the two strap layers 226, 228.

The knife edge is parallel to the plane of the strap.

It is also to be noted that severing is effected after heating and fusing has been completed, i.e. after the heating current to the heating elements 216, 216A has been switched off. (See sub-assembly cycle description later.) The knife 214 is preferably made of Inconel, which can readily be welded to contacts 226 of Berylium copper to which the flying leads 218 are connected. The knife 214 is preferably intermittently heated, by means of a suitable switch synchronised to the reciprocating motion of the carriage.

Heating Element Sub-Assembly Cycle

1. Sub-assembly moves forward (from a home position) to a maximum displaced position.

2. Slightly before reaching this maximum position, the electric current is turned on and the element or elements begin to warm up to the fusing temperature.

3. During the return movement (towards the home position) the high temperature of the element or elements causes the two layers of material to fuse behind it.

4. Just before the sub-assembly reaches the home position the current is switched off thus allowing the element or elements to begin to cool down so inhibiting fusing of the two layers over the final phase of the displacement.

5. The sub-assembly pauses at the home position for a length of time sufficient to clear the bond caused by the fusing to become secure.

6. The sub-assembly is then moved in the forward direction once again, while the current remains OFF, until it occupies an intermediate position in which the element or one of the elements in the separator plate 92 lies under the heated knife edge 116. (Preferably the leading element is located below the edge 116 so as to reduce the length of the tab of unfused material which will be left after securing.)

7. The electrical current of the knife edge 116 is initiated as soon as the sub-assembly starts to move towards its intermediate position and after severance the current for the knife edge is turned-off.

8. After severance the sub-assembly moves in the return direction once again to return to its home position, from where the cycle can begin again.

The above described apparatus may be used in a packaging method which comprises the following successive steps: 1) position carton; 2) loop strap around carton; 3) load strap into securing tool; 4) take up slack; 5) tension strap ; 6) heating seal/cut-off strap; 7) release. If the device is incorporated into a hand tool, the tool is removed. If it is incorporated in the operating head of the stationary stripping machine, the pack is removed from the machine. Thus, in practice, the illustrated apparatus may be combined with a strap tensioner and strap cutter.

The present invention is applicable to all types of thermoplastics strap, substantially regardless of width, colour or thickness, especially straps up to 30 mm width and 1.5 mm thickness.

Clearly, various modifications are possible within the scope of the invention as defined by the claims. For example, the heating element assembly may utilise various metallic materials other than those specified. In particular, the heating element may be made of an austenitic stainless steel or a Brightray alloy. In some circumstances the resilient pads applying the fusing pressure may be replaced by spring-urged, relatively rigid pads. However, for the fusing of straps with crowned or barrel-shaped surfaces across their width, the use of resilient pads will be desirable to ensure close contact between such strap surfaces. The heating element may be maintained under tension in various ways other than a tensioning element having concertina-type folds. In general, various different and modified arrangements are possible in accordance with the invention, the scope of which is defined by the appended claims.

**Claims**

1. Apparatus for heat sealing together layers of strap of thermoplastics material, comprising a thin, flat, electrical heating element, means supporting the heating element and means for moving said supporting means so that in use the heating element moves between two layers of strap generally in the longitudinal direction thereof, characterised in that said heating element (16 or 58 or 116, 116A) is supported in stretched condition on a carriage which is reciprocated to cause the heating element to perform a cyclic movement forward and back between the two strap layers; the heating element is connected in a heating current circuit which includes a switch (42) and is powered by a battery source (40); the switch is closed and opened in timed relationship to the reciprocating movement of the carriage in order to supply heating current to the heating element during a preselected portion of its cyclic movement, and the heating element is of low thermal mass such that it is maintained at a required plastics fusing temperature for the period that the switch is closed and not beyond such period.

2. Apparatus according to claim 1, in which a pressure pad is provided for pressing the strap layers together under a fusing pressure in the heated regions of the said layers, characterised in that the pad (290) is mounted for rocking about an axis perpendicular to the length direction of the strap layer and is resiliently deformable so as to be capable of bowing about the rocking axis to accommodate the movement of the heating element between the two layers of flexible material.

3. Apparatus according to claim 2, characterised in that a separator plate (292) is provided between the two layers of flexible material to separate the strap layer prior to heating.

4. Apparatus according to claim 1, characterised in that the carriage also carries a separator plate (292) extending between the two layers of strap to separate same prior to heating.

5. Apparatus according to claim 4, characterised in that the layers of material are sandwiched between the rockable pad and a first pressure pad which is constituted by a fixed first platen (294), and the rockable pressure pad is supported by a second platen (296) the latter being movable as by pivoting away from the first platen to enable the fusing pressure to be applied and to be relieved.

6. Apparatus according to any of claims 1 to 5, wherein the heating element is tensioned by stretching between a support and a tensioning element, characterised in that the tensioning element (22) is an elongate element extending in line with the heating element and resiliently formed by concertina-type (24) folds transverse to its length.

7. Apparatus according to claim 6, characterised in that the tensioning element (68) is a spring having a foot (70) connected to the heating element, an intermediate U-portion (72) the limbs of which can flex toward and away from one another in line with or parallel to the length of the heating element, and an end portion (74) whereat the spring is anchored to effect tensioning of the heating element.

8. Apparatus according to claim 6 or claim 7, characterised in that the heating element (58) is a flat element between 0.05 mm and 0.4 mm thick with a width about one half its unsupported length between the support and the tensioning element.

9. Apparatus according to claim 6, characterised in that two or more thin flat elongate electrical heating elements (116, 116A) are provided, supported under tension in generally parallel relationship.

10. Apparatus according to any one of claims 1 to 9, characterised in that the switch is closed to supply the heating current to the heating element from the battery source such that the thermoplastics strap layers are fused together during only one sense of reciprocation of the carriage.

11. Apparatus according to claim 10, characterised by means for advancing said carriage from a home position to a maximum displacement position and for returning said support to its home position, carrying with it the heating element which extends between the strap layers, and control means operable in timed relationship to the movement of the support whereby the heating current is supplied to cause the heating element to reach the melting temperature of the thermoplastics material at the end of the advance stroke and to cause the current to be maintained so that the thermoplastics layers are fused together during the return stroke.

12. Apparatus according to claim 10 or claim 11, characterised in that a pair of substantially rigid electrical connectors (176, 176a) carry contacts making sliding electrical engagements with a corresponding pair of electrical rails (180, 182) carried by a structure relative to which the heating element is reciprocable, the rails extending parallel to the direction of reciprocation and being adapted for supply of electrical power thereto in order to transmit heating current to and from the one or more heating elements through said connectors and contacts.

13. Apparatus according to claim 10, claim 11 or claim 12, further comprising cutting means for severing one strap layer and not the other after fusing the strap layers together, characterised in that said cutting means includes a knife edge (214) which is operable on one of said layers against the backing afforded by a solid element (216, 216A or 292) extending between the two strap layers.

14. Apparatus according to claim 13, characterised in that the solid element is a heating element (216, 216A) or is a separator plate (292).

**Patentansprüche**

1. Vorrichtung zum Warmverschweißen von Bandlagen aus thermoplastischem Material mit einem dünnen, ebenen elektrischen Heizelement, mit Mitteln zum Abstützen des Heizelementes und mit Mitteln zum Bewegen der Abstützmittel, so daß sich das Heizelement bei Gebrauch zwischen den beiden Bandlagen im allgemeinen in deren Längsrichtung bewegt, dadurch gekennzeichnet, daß das Heizelement (16 oder 58 oder 116, 116A) in gestrecktem Zustand auf einem Wagen abgestützt ist, der hin und her bewegt wird, um zu bewirken, daß das Heizelement eine zyklische Bewegung vorwärts und rückwärts zwischen den beiden Bandlagen durchführt; das Heizelement in einen Heizstromkreis eingeschaltet ist, der einen Schalter (42) enthält und von einer Batteriequelle (40) gespeist wird; der Schalter in zeitlicher Beziehung zu der Hin- und Herbewegung des Wagens geschlossen und geöffnet wird, damit dem Heizelement Heizstrom während eines vorgewählten Abschnittes seiner zyklischen Bewegung zugeführt wird, und das Heizelement eine geringe thermische Masse aufweist, so daß es während der Schließzeit des Schalters und nicht darüber hinaus auf der erforderlichen Kunststoff-Schmelztemperatur gehalten wird.

2. Vorrichtung nach Anspruch 1, wobei ein Druckkissen zum Zusammendrücken der Bandlagen unter einem Schmelzdruck in den aufgeheizten Gebieten der Lagen vorgesehen ist, dadurch gekennzeichnet, daß das Kissen (290) zum Ausführen einer Schwingbewegung um eine zu der Längsrichtung der Bandlage senkrecht stehende Achse montiert und federnd verformbar ist, so daß es sich um die Schwingachse neigen und die Bewegung des Heizelementes zwischen den aus dem flexiblen Material bestehenden beiden Lagen aufnehmen kann.

3. Vorrichtung nach Anspruch 2, dadurch gekennzeichnet, daß eine Separatorplatte (292) zwischen den aus dem flexiblen Material bestehenden beiden Lagen zum Trennen der Bandlage vor dem Aufheizen vorgesehen ist.

4. Vorrichtung nach Anspruch 1, dadurch gekennzeichnet, daß der Wagen auch eine zwischen den beiden Bandlagen verlaufende Separatorplatte (292) zu deren Trennen vor dem Aufheizen trägt.

5. Vorrichtung nach Anspruch 4, dadurch gekennzeichnet, daß die Materiallagen zwischen dem hin- und herschwingenden Kissen und einem ersten Druckkissen eingelegt sind, das von einer ersten festen Platte (294) gebildet wird, und das hin- und herschwingende Druckkissen von einer zweiten Platte (296) abgestützt wird, und die letztere durch Wegschwenken von der ersten Platte verschiebbar ist, um damit das Anlegen und das Abnehmen des Schmelzdruckes zu ermöglichen.

6. Vorrichtung nach irgendeinem der Ansprüche 1 bis 5, wobei das Heizelement durch Strecken zwischen einer Abstützung und einem Spannelement gespannt wird, dadurch gekennzeichnet, daß das Spannelement (22) ein mit dem Heizelement in einer Linie verlaufendes langgestrecktes Element und federnd durch quer zu seiner Länge verlaufende ziehharmonikaartige (24) Falten gebildet wird.

7. Vorrichtung nach Anspruch 6, dadurch gekennzeichnet, daß das Spannelement (68) eine mit einem Fuß (70) mit dem Heizelement verbundene Feder ist, ein dazwischenliegender U-Abschnitt (72), dessen Schenkel in einer Linie mit oder parallel zu der Länge des Heizelementes aufeinander zu und voneinander weg gebogen werden können, und ein Endabschnitt (74), an dem die Feder zum Bewirken des Spannes des Heizelementes verankert ist.

8. Vorrichtung nach Anspruch 6 oder Anspruch 7, dadurch gekennzeichnet, daß das Heizelement (58) ein flaches Element mit zwischen 0,05 mm und 0,4 mm Stärke und mit einer Breite von etwa einer Hälfte seiner nicht abgestützten Länge zwischen der Abstützung und dem Spannelement ist.

9. Vorrichtung nach Anspruch 6, dadurch gekennzeichnet, daß zwei oder mehr dünne, ebene, langgestreckte elektrische Heizelemente (116, 116A) vorgesehen sind, die in allgemein paralleler Beziehung zueinander unter Spannung abgestützt werden.

10. Vorrichtung nach irgendeinem der Patentansprüche 1 bis 9, dadurch gekennzeichnet, daß der Schalter geschlossen ist zur Zufuhr des Heizstromes zum Heizelement von der Batteriequelle derart, daß die thermoplastischen Bandlagen nur während einer Bewegungsrichtung der Hin- und Herbewegung des Wagens zusammengeschmolzen werden.

11. Vorrichtung nach Anspruch 10, gekennzeichnet durch Mittel zum Vorbewegen des Wagens von einer Ruhestellung in eine Stellung maximaler Verschiebung und zum Rückbewegen der Abstützung in deren Ruhestellung, die das Heizelement mit sich tragen, das zwischen den Bandlagen verläuft, und Steuermittel, die in zeitlicher Beziehung zu der Bewegung der Abstützung wirksam werden, so daß der Heizstrom zugeführt wird und bewirkt, daß das Heizelement die Schmelztemperatur der thermoplastischen Materials am Ende der Vorbewegung erreicht, und bewirkt, daß der Strom so aufrecht erhalten wird, daß die thermoplastischen Lagen während der Rückbewegung zusammengeschmolzen werden.

12. Vorrichtung nach Anspruch 10 oder Anspruch 11, dadurch gekennzeichnet, daß zwei im wesentlichen steife elektrische Verbinder (176, 176A) Kontakte tragen, die mit einem entsprechenden Paar von elektrischen Schienen (180, 182) in gleitender elektrischer Anlage liegen, wobei die Schienen von einer Struktur getragen werden, gegenüber der das Heizelement hin und her verschiebbar ist, und die Schienen parallel zu der Richtung der Hin- und Herbewegung verlaufen und dem Heizelement elektrische Energie zuführen können, damit der Heizstrom durch die Verbinder und Kontakte dem einen oder den mehreren Heizelementen zugeführt und von diesen abgeleitet werden kann.

13. Vorrichtung nach Anspruch 10, Anspruch 11 oder Anspruch 12, weiter mit einem Schneidmittel zum Durchtrennen der einen und nicht der anderen Bandlage nach dem Zusammenschmelzen der Bandlagen, dadurch gekennzeichnet, daß das Schneidmittel eine Messerkante (214) enthält, die auf einer der Lagen gegen eine Unterlage wirksam ist, die durch ein zwischen den beiden Bandlagen verlaufendes festes Element (216, 216A oder 292) gebildet wird.

14. Vorrichtung nach Anspruch 13, dadurch gekennzeichnet, daß das feste Elemente ein Heizelement (216, 216A) oder eine Separatorplatte (292) ist.

## Revendications

1. Dispositif pour souder ensemble à chaud des couches de ruban en matériau thermoplastique, comportant un élément chauffant électrique plat et mince des moyens supportant l'élément chauffant et des moyens pour déplacer lesdits moyens de support de façon à ce que, lors de l'utilisation, l'élément chauffant se déplace entre deux couches de ruban, globalement dans la direction longitudinale de celles-ci, caractérisé en ce que ledit élément chauffant (16 ou 58 ou 116, 116A) est supporté dans un état tendu sur un chariot qui est déplacé alternativement afin de faire effectuer à l'élément chauffant un mouvement cyclique vers l'avant et vers l'arrière entre les deux couches de ruban; l'élément chauffant est raccordé dans un circuit de courant de chauffage qui comporte un interrupteur (42) et qui est alimenté par une source ou batterie (40); l'interrupteur est fermé et ouvert suivant une relation de synchronisation avec le déplacement alternatif du chariot afin de délivrer le courant de chauffage à l'élément chauffant durant une partie présélectionnée de son mouvement cyclique, et l'élément chauffant est de faible masse thermique, de manière à ce qu'il soit maintenu à une température de fusion du plastique voulue pendant la période pendant laquelle l'interrupteur est fermé, et non pas au delà de cette période.

2. Dispositif selon la revendication 1, dans lequel un tampon presseur est disposé pour appuyer les couches de ruban l'une contre l'autre sous une pression de fusion dans les zones chauffées desdites couches, caractérisé en ce que le tampon (290) est monté de façon à osciller autour d'un axe perpendiculaire à la direction de la longueur des couches de ruban, et est déformable élastiquement, de façon à être capable de s'incurver autour de l'axe d'oscillation, afin de s'adapter au déplacement de l'élément chauffant entre les deux couches de matériau flexible.

3. Dispositif selon la revendication 2, caractérisé en ce qu'une plaque de séparation (292) est présente entre les deux couches de matériau flexible afin de séparer les couches de ruban avant le chauffage.

4. Dispositif selon la revendication 1, caractérisé en ce que le chariot porte également une plaque de séparation (292) s'étendant entre les deux couches de ruban afin de séparer celles-ci avant le chauffage.

5. Dispositif selon la revendication 4, caractérisé en ce que les couches de matériau sont prises en sandwich entre le tampon oscillant et un premier tampon presseur qui est constitué par une première platine fixe (294), et en ce que le tampon presseur oscillant est supporté par une deuxième platine (296), cette dernière étant mobile, par exemple en pivotant pour s'éloigner de la première platine, de façon à permettre à la pression de fusion d'être appliquée et d'être relâchée.

6. Dispositif selon l'une quelconque des revendications 1 à 5, dans lequel l'élément chauffant est tendu par tension entre un support et un élément tendeur, caractérisé en ce que l'élément tendeur (22) est un élément allongé s'étendant dans l'alignement de l'élément chauffant et formé de façon élastique par des plis (24) de type accordéon transversalement à sa longueur.

7. Dispositif selon la revendication 6, caractérisé en ce que l'élément tendeur (68) est un ressort possédant un pied (70) connecté à l'élément chauffant, une partie intermédiare en U (72) dont les branches peuvent s'incurver l'une vers l'autre et s'éloigner l'une de l'autre dans l'alignement de ou parallèlement à la longueur de l'élément chauffant, et une partie d'extrémité (74) au niveau de laquelle le ressort est ancré afin de réaliser la tension de l'élément chauffant.

8. Dispositif selon la revendication 6 ou la revendication 7, caractérisé en ce que l'élément chauffant (58) est un élément plat d'une épaisseur comprise entre 0,05 mm et 0,4 mm, avec une largeur égale à environ la moitié de sa longueur non soutenue entre le support et l'élément tendeur.

9. Dispositif selon la revendication 6, caractérisé en ce que deux ou plusieurs éléments chauffants électriques allongés plats et minces (116, 116A) sont présents, supportés avec une tension dans une relation globalement parallèle.

10. Dispositif selon l'une quelconque des revendications 1 à 9, caractérisé en ce que l'interrupteur est fermé pour délivrer le courant de chauffage à l'élément chauffant depuis la source ou batterie de telle sorte que les couches de ruban en matière thermoplastique ne soient fondues ensemble que durant un seul sens du déplacement alternatif du chariot.

11. Dispositif selon la revendication 10, caractérisé par des moyens pour faire avancer ledit chariot depuis une position de repos jusqu'à une position de déplacement maximal et pour faire revenir ledit support dans sa position de repos, portant avec lui l'élément chauffant qui s'étend entre les couches de ruban, et par des moyens de commande utilisables en relation de synchronisation avec le déplacement du support, grâce auxquels le courant de chauffage est délivré pour faire atteindre à l'élément chauffant la température de fusion du matériau thermoplastique à la fin du parcours d'avance et pour provoquer le maintien du courant de sorte que les couches de matière thermoplastique soient fondues ensemble durant le parcours de retour.

12. Dispositif selon la revendication 10 ou la revendication 11, caractérisé en ce qu'une paire de connecteurs substantiellement rigides (176, 176A) portent des contacts établissant des liaisons électriques glissantes avec une paire correspondante de barres électriques (180, 182) portées par une structure par rapport à laquelle l'élément chauffant peut être déplacé alternativement, les barres s'étendant parallèlement à la direction du déplacement alternatif et étant adaptées à la délivrance de courant électrique à celui-ci de façon à transmettre le courant de chauffage vers et à partir d'un ou de plusieurs éléments chauffants par l'intermédiaire desdits connecteurs et contacts.

13. Dispositif selon la revendication 10, la revendication 11 ou la revendication 12, comportant de plus des moyens de coupe pour trancher l'une des couches de ruban et non l'autre après avoir fondu ensemble les couches de ruban, caractérisé en ce que lesdits moyens de coupe comportent une arête tranchante (214) qui peut opérer sur l'une desdites couches contre l'appui offert par un élément solide (216, 216A ou 292) s'étendant entre les deux couches de ruban.

14. Dispositif selon la revendication 13, caractérisé en ce que l'élément solide est un élément chauffant (216, 216A) ou est une plaque de séparation (292).

Fig.1.

Fig.2.

Fig.3.

1

**Fig.4.**

**Fig.5.**

Fig. 6.

Fig. 7.

Fig. 8.

Fig. 9.

4